# EUROPÄISCHE PATENTSCHRIFT

(11) **EP 0 596 235 B1**
(45) Veröffentlichungstag und Bekanntmachung des Hinweises auf die Patenterteilung: **10.04.1996**
(21) Anmeldenummer: 93115312.6
(22) Anmeldetag: 23.09.1993
(51) Int. Cl.: B60R 11/02

(54) **Behälter für Tonträger**
Housing for an audio device
Boîtier pour un dispositif audio

(30) Priorität: 05.11.1992 DE 4237368
(43) Veröffentlichungstag der Anmeldung: 11.05.1994
(73) Patentinhaber: fischerwerke Artur Fischer GmbH & Co. KG, D-72178 Waldachtal (DE)
(72) Erfinder: Nehl, Wolfgang, D-72178 Waldachtal (DE); Skott, Jürgen, D-72213 Altensteig (DE); Renner, Dietmar, D-72213 Altensteig (DE)

(56) Entgegenhaltungen:
- EP-A- 0 381 436
- US-A- 3 878 736

## Beschreibung

Die Erfindung betrifft einen Behälter für Tonträger, wie Compact Kassetten, Compact-discs und dgl., zur Montage in einem Kraftfahrzeug, mit den im Oberbegriff des Anspruches 1 genannten Merkmalen.

Bei einem bekannten Behälter für Tonträger ist an der Rückseite des Behältergehäuses ein Deckel angebracht, der mit Einstecköffnungen versehen ist. In diese ist ein Verbindungsstück einrastbar, das an einem Befestigungssockel angelenkt ist. Je nach dem welche Einstecköffnung gewählt wird, ist der Behäter in unterschiedlichen Positionen in einem Fahrzeug durch Anschrauben oder Ankleben des Befestigungssockels montierbar. Durch die Verbindung des Befestigungssockels mit dem an der Rückseite des Gehäuses angebrachten Deckel ergibt sich durch das Gewicht des Behälters ein auf den Befestigungssockel wirkendes Moment, das zu unerwünschten Vibrationen und Geräuschen beim Fahren führt. Ferner ist zur Vermeidung eines Ermüdungsbruches des Befestigungssockels eine aufwendige Konstruktion erforderlich. Der bekannte Befestigungssockel weist außerdem zwischen Verbindungsstück und Befestigungssockel eine arretierbare Gelenkverbindung auf, um den Behälter in unterschiedliche Winkelstellungen zur Verbesserung des Zugriffs bringen zu können. Da das vom Behälter ausgehende Moment unmittelbar auf diese Gelenkverbindung einwirkt, kann eine unbeabsichtigte Verstellung der Winkelstellung des Behälters, insbesondere bei auf das Fahrzeug wirkenden harten Stößen, eintreten.

Der Erfindung liegt die Aufgabe zugrunde, einen in ein Fahrzeug montierbaren Behälter zu schaffen, der abnehmbar und vibrationssicher auf einem im Fahrzeug befestigten und kostengünstig herstellbaren Befestigungssockel aufsteckbar ist.

Die Lösung dieser Aufgabe wird durch die im Anspruch 1 angegebenen Merkmale erreicht. Mit den an den Seitenflächen des Befestigungssockels angeordneten und in entsprechende Führungen des Behältergehäuses eingreifenden Halteleisten wird eine Verbindung geschaffen, die in der Lage ist, die auf den Behälter wirkenden Seiten- und Vertikalkräfte aufzunehmen. Gleichzeitig erfolgt die Abstützung des Behälters in aufgesetzter Position unterhalb und in hängender Position oberhalb des Behälterschwerpunktes, so daß keine Vibrationen und Spannungsspitzen im Befestigungssockel aus Momentbelastungen entstehen können.

Um den Behälter in der Aufschiebrichtung auf den Befestigungssockel zu sichern, ist gemäß der Erfindung eine der zusätzlich vorgesehenen Führungsflächen zum Aufschieben des Behälters durch einen brückenartigen, mit Zähnen versehenen Steg gebildet. Dieser Steg greift federnd in eine am Behältergehäuse angeordnete Zahnleiste ein, so daß durch die Verzahnung zwischen Befestigungssockel und Behälter eine unbeabsichtigte Verschiebung ausgeschlossen ist. Nur bei von Hand aufzubringenden Schiebekräften läßt sich der brückenartige Steg aus der Zahnleiste des Behältergehäuses ausrasten, so daß der Behälter bei Bedarf aufgesetzt und abgenommen werden kann. Zweckmäßigerweise sind die Zähne am Steg und an der Zahnleiste mit Abrundungen und/oder schrägen Zahnflanken versehen.

In einer weiteren Ausgestaltung der Erfindung kann das Behältergehäuse zwei gespiegelt parallel verlaufende Zahnleisten aufweisen, so daß das Behältergehäuse unabhängig von einer gedrehten Anordnung des Befestigungssockels immer in der richtigen Position aufschiebbar ist.

Zur Verbesserung der Federwirkung des Steges ist es vorteilhaft, den beispielsweise aus Kunststoff hergestellten Befestigungssockel einschließlich des brückenartigen Steges durch eine Metallfeder abzustützen.

Um auch eine Winkelstellung des Behälters zu ermöglichen, kann nach einer weiteren Ausgestaltung der Erfindung der Befestigungssockel durch ein mit dem Behältergehäuse verbindbares Oberteil und einem im Fahrzeug befestigbaren Unterteil gebildet sein, wobei beide Teile über ein Gelenk verbunden und in verschiedenen Winkelstellungen zueinander arretierbar sind. Zur Arretierung weisen die Stirnseiten des Ober- und Unterteils miteinander fluchtende und übereinander angeordnete Öffnungen auf, in die im Oberteil geführte Schieber mit jeweils stirnseitig angeordneten und den Öffnungen angepaßten Vorsprüngen einrastbar sind. Durch das Einrasten der Vorsprünge in die fluchtenden Öffnungen beider Teile ergibt sich eine formschlüssige Arretierung, die unbeabsichtigte Verstellungen des Winkels ausschließt.

Zur Einstellung des gewünschten Winkels und zur Sicherung der Winkelstellung ist gemäß einer weiteren Ausgestaltung der Erfindung vorgesehen, die Schieber über eine bewegbare Querstange miteinander zu verbinden, wobei die Verbindung über am Schieber angeordnete Zapfen hergestellt ist, die in schräg angeordneten Langlöchern der Querstange eingreifen. Durch einen an der Querstange angeordneten und in die Führungsflächen des Behältergehäuses eingreifenden Ansatz, der mit Teilabschnitten der Führungsflächen des Befestigungssockels ausgestattet ist, wird nach dem Aufschieben des Behältergehäuses auf den Befestigungssockel die Querstange und damit gleichzeitig auch die in den Öffnungen eingerasteten Schieber blockiert. Somit ist die Winkelstellung des Behältergehäuses gesichert.

Bevorzugte Ausführungsbeispiele sind in den beigefügten Zeichnungen dargestellt und werden nachstehend im einzelnen erläutert.

Es zeigen:
- Figur 1: ein Ausführungsbeispiel eines Befestigungssockels in einer Draufsicht auf die Führungsflächen,
- Figur 2: einen Längsschnitt durch den Befestigungssockel gemäß Figur 1 mit aufgesetztem Behälter,
- Figur 3: ein weiteres Ausführungsbeispiel des Befestigungssockels mit einer Verstellmöglichkeit für den Behälter,
- Figur 4: eine Frontansicht des Ausführungsbeispiels nach Figur 3,
- Figur 5: ein Seitenschnitt gemäß der in Figur 3 eingezeichneten Schnittlinie B-B und
- Figur 6: den Seitenschnitt gemäß Figur 5 bei einer Winkelstellung von 15°.

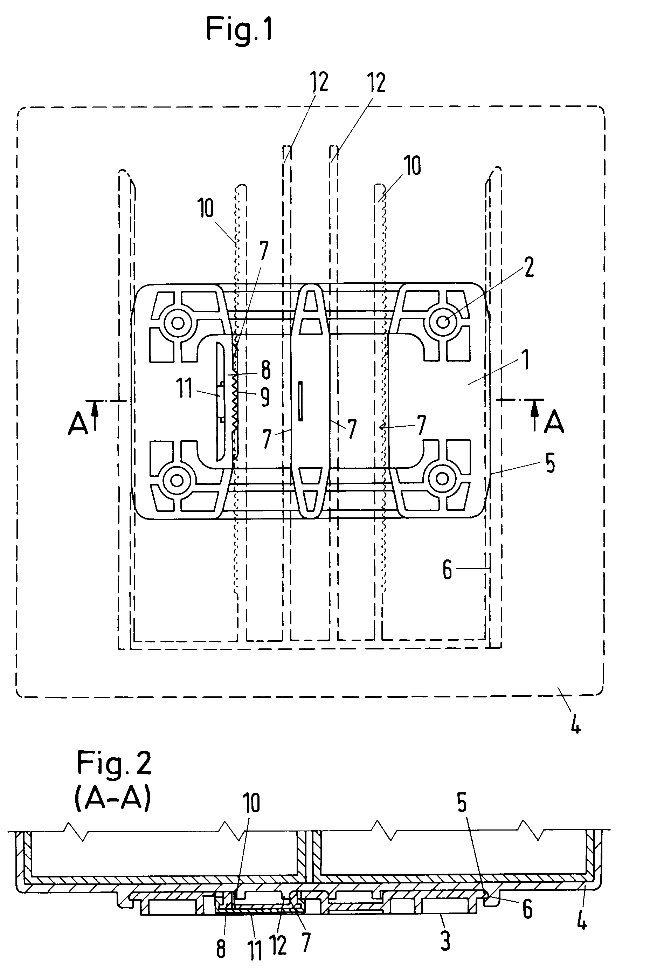

Der in Figur 1 dargestellte Befestigungssockel 1 besteht aus einer Kunststoffplatte, die zur Befestigung in einem Fahrzeug vier Befestigungslöcher 2 und/oder an ihrer Unterseite 3 ein doppelseitiges Klebeband (nicht dargestellt) aufweist. Zur Halterung des Behältergehäuses 4 auf dem Befestigungssockel 1 sind an den beiden Seitenflächen des Befestigungssockels vorspringende Halteleisten 5 angeordnet, die in entsprechende Führungen 6 des Behältergehäuses 4 eingreifen. Zum verkantfreien Aufschieben des Behälters auf den Befestigungssockel weist dieser mehrere parallel zu den Halteleisten laufende Führungsflächen 7 auf. Eine dieser Führungsflächen ist als brückenartiger Steg 8 ausgebildet, dessen Fläche mit Zähnen 9 versehen ist. Dieser Steg greift in eine am Behältergehäuse 4 angeordnete Zahnleiste 10 ein. Durch Abrundungen der Zahnspitzen und schrägen Zahnflanken ist bei entsprechendem Schiebedruck ein Aufschieben des Behälters 4 auf den Befestigungssockel 1 und ggf. die Wiederabnahme möglich. Bei entsprechendem Druck gibt der brückenartige Steg soweit nach, daß eine Ausrastung der Verzahnung erfolgt. Um die Federwirkung des Steges zu verbessern bzw. zu unterstützen, ist hinter dem Steg eine Blattfeder 11 eingehängt.

Durch die Anordnung einer zweiten Zahnleiste 10 ist es möglich, den Behälter von beiden Seiten her auf den Befestigungssockel aufzuschieben. Die nicht in Eingriff befindliche zweite Zahnleiste dient gleichzeitig auch als Führung, um ein Verkanten des Behälters beim Aufschieben zu vermeiden. Dem gleichen Zweck dienen die weiteren am Behältergehäuse 4 angeordneten Führungsleisten 12.

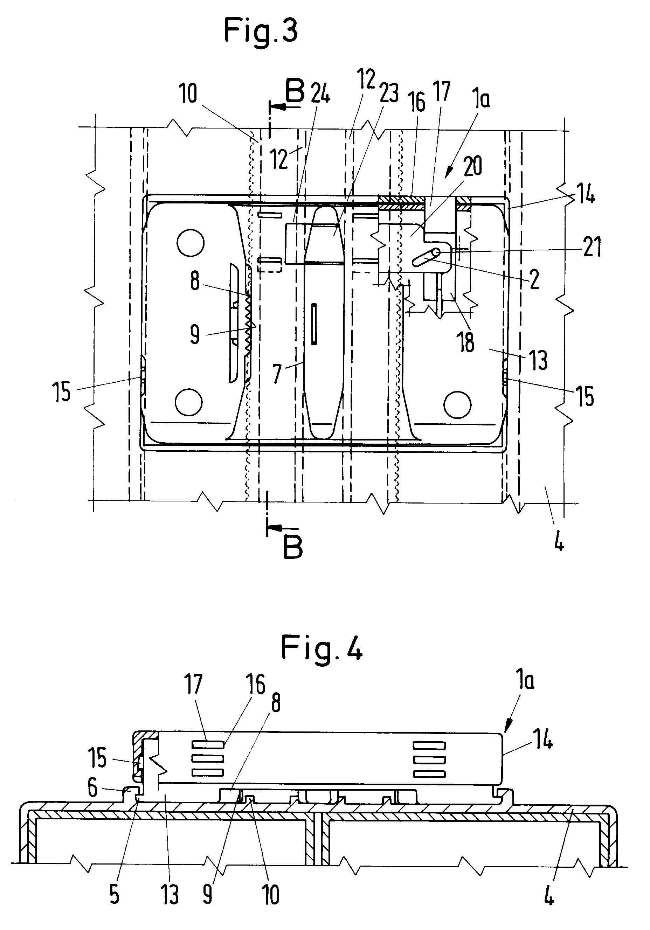

Die in den Figuren 3 bis 6 dargestellte Ausführungsform des Befestigungssockels 1a besteht aus einem mit dem Behältergehäuse 4 verbindbaren Oberteil 13 und dem am Fahrzeug über Schrauben oder einer Klebefolie befestigbaren Unterteil 14. Ober- und Unterteil sind über ein Gelenk 15 verschwenkbar verbunden. Die lösbare Verbindung zwischen Oberteil 13 und dem Behältergehäuse 4 erfolgt in gleicher Weise wie bei dem Ausführungsbeispiel nach Figur 1 und 2.

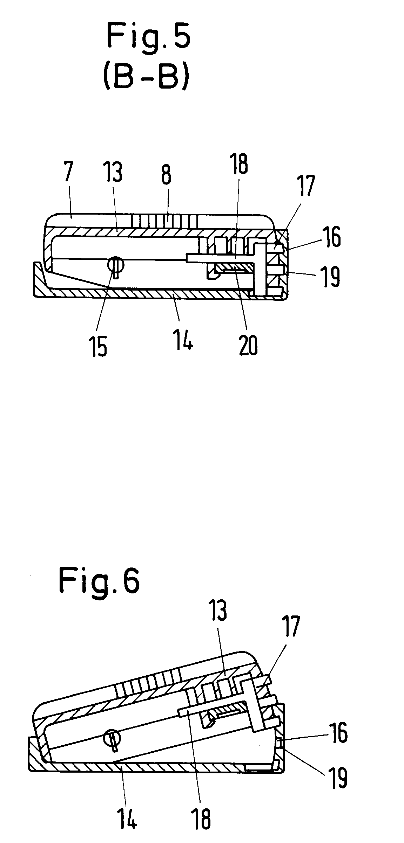

Zur Arretierung der Winkelstellung zwischen Ober- und Unterteil weisen beide an ihrer Stirnseite miteinander fluchtende und übereinander angeordnete Öffnungen 16 auf, in die den Öffnungen 16 angepaßte Vorsprünge 17 zweier im Oberteil 13 geführten Schieber 18 eingreifen. Aus optischen Gründen können diese Öffnungen im Unterteil 14 gemäß Figur 5 und 6 mit einer Spritzhaut 19 geschlossen sein. Zur Veränderung der Winkelstellung werden die Vorsprünge 17 durch Zurückziehen des Schiebers 18 ausgerastet. Das Zurückziehen der Schieber erfolgt über eine bewegbare Querstange 20, die mit den beiden Schiebern 18 über Zapfen 21 verbunden ist. Die Zapfen greifen in schräg angeordnete Langlöcher 22 der Querstange 20 ein, so daß durch eine Verschiebung der Querstange 20 die Schieber 18 in einer rechtwinklig dazu stehenden Bewegungsrichtung verschoben werden.

Die Verschiebung der Querstange 20 erfolgt durch einen an der Querstange angeordneten Zapfen 23, der durch die Aussparung 24 in die Führungsleisten 12 des Behältergehäuses 4 eingreift. Der Ansatz 23 bildet einen Teil der Führungsflächen 7 des Befestigungssockels 1a. Im eingerasteten und damit die Winkelstellung arretierten Zustand befindet sich der Ansatz 23 innerhalb der beiden Führungsleisten 12 des Behältergehäuses 4, so daß ein unbeabsichtigtes Ausrasten der Schieber 18 nicht möglich ist. Das auf den Befestigungssockel 1a aufgeschobene Behältergehäuse 4 wird durch die am Oberteil angeordneten Halteleisten 5, die in die entsprechenden Führungen 6 des Behältergehäuses 4 eingreifen, gehalten. Durch den brückenartigen Steg 8 mit den in die Zahnleiste 10 eingreifenden Zähnen 9 wird das Behältergehäuse 4 in Schieberichtung arretiert.

Die Figuren 3 bis 5 zeigen den Befestigungssockel 1a in der Winkelstellung 0°, während in Figur 6 eine Winkelstellung von 15° arretiert ist.

## Patentansprüche

1. Behälter für Tonträger, wie Compact Kassetten, Compact Discs und dgl., der zur Montage in einem Kraftfahrzeug einen mit seinem Gehäuse lösbar verbundenen und im Fahrzeug befestigbaren Befestigungssockel aufweist, **dadurch gekennzeichnet,** daß der Befestigungssockel (1, 1a) an seinen beiden Seitenflächen jeweils eine Halteleiste (5) aufweist, die in die Halteleisten übergreifende Führungen (6) des Behältergehäuses (4) eingreifen, und daß am Befestigungssockel (1, 1a) weitere Führungsflächen (7) angeordnet sind, wobei eine Führungsfläche durch einen brückenartigen, mit Zähnen (9) versehenen Steg (8) gebildet ist, der federnd gegen eine am Behältergehäuse (4) angeordneten Zahnleiste (10) drückt.

2. Behälter nach Anspruch 1, **dadurch gekennzeichnet,** daß die Zähne (9) des Steges (8) und der Zahnleiste (10) mit Abrundungen und/oder schrägen Zahnflanken versehen sind.

3. Behälter nach Anspruch 1, **dadurch gekennzeichnet**, daß das Behältergehäuse (4) zwei gespiegelt parallel verlaufende Zahnleisten (10) aufweist.

4. Behälter nach Anspruch 1, **dadurch gekennzeichnet,** daß der Steg (8) durch eine Metallfeder (11) abgestützt ist.

5. Behälter nach Anspruch 1, **dadurch gekennzeichnet,** daß der Befestigungssockel (1a) durch ein mit dem Behältergehäuse (4) verbindbares Oberteil (13) und einem im Fahrzeug befestigbaren Unterteil (14) gebildet ist, die beide über ein Gelenk (15) verbunden und in verschiedenen Winkelstellungen zueinander arretierbar sind.

6. Behälter nach Anspruch 5, **dadurch gekennzeichnet,** daß die Stirnseite des Ober- und Unterteils (13, 14) miteinander fluchtende und übereinander angeordnete Öffnungen (16) aufweist, in die im Oberteil (13) geführte Schieber (18) mit jeweils stirnseitig angeordneten und den Öffnungen (16) angepaßten Vorsprüngen (17) zur Arretierung der Winkelstellung einrastbar sind.

7. Behälter nach Anspruch 5 und 6, **dadurch gekennzeichnet**, daß die Schieber (18) über eine bewegbare Querstange (20) miteinander verbunden sind, wobei die Verbindung über am Schieber (18) angeordnete Zapfen (21) hergestellt ist, die in schräg angeordnete Langlöcher (22) der Querstange (20) eingreifen.

8. Behälter nach Anspruch 7, **dadurch gekennzeichnet,** daß die Querstange (20) einen in die Führungsleisten (12) des Behältergehäuses (4) eingreifenden Ansatz (23) aufweist, der mit Teilabschnitten der Führungsflächen (7) des Befestigungssockels (1a) ausgestattet ist.

## Claims

1. Container for sound carriers, such as compact cassettes, compact discs and the like, which for the purpose of mounting in a motor vehicle has a mounting base that is releasably connected to the container housing and can be mounted in the vehicle, **characterised in that** the mounting base (1, 1a) has a retaining rail (5) on each of its two side faces, the retaining rails (5) engaging in guides (6) of the container housing (4) that engage over the retaining rails, and further guide surfaces (7) are arranged on the mounting base (1, 1a), one guide surface being formed by a bridge-like web (8) which is provided with teeth (9) and which presses resiliently against a rack (10) arranged on the container housing (4).

2. Container according to claim 1, **characterised in that** the teeth (9) of the web (8) and the rack (10) are rounded and/or are provided with inclined tooth profiles.

3. Container according to claim 1, **characterised in that** the container housing (4) has two racks (10) extending mirror-symmetrically parallel.

4. Container according to claim 1, **characterised in that** the web (8) is supported by a metal spring (11).

5. Container according to claim 1, **characterised in that** the mounting base (1a) is formed by an upper part (13) that can be connected to the container housing (4) and a lower part (14) that can be mounted in the vehicle, the two parts being connected by means of a joint (15) and being lockable in various angled positions relative to one another.

6. Container according to claim 5, **characterised in that** the end faces of the upper and lower parts (13, 14) have openings (16) arranged one above the other and in alignment with one another, in which openings slider members (18) guided in the upper part (13) can be engaged by means of projections (17), arranged on the end faces of the slider members and matched to the openings (16), in order to lock the angled position.

7. Container according to claims 5 and 6, **characterised in that** the slider members (18) are connected to one another by means of a movable cross-bar (20), the connection being made by means of pegs (21) arranged on the slider member (18), which pegs engage in obliquely arranged oblong slots (22) in the cross-bar (20).

8. Container according to claim 7, **characterised in that** the cross-bar (20) has a lug (23) engaging in the guide bars (12) of the container housing (4), which lug is provided with portions of the guide surfaces (7) of the mounting base (1a).

## Revendications

1. Conteneur pour supports d'enregistrement audio, comme des cassettes compactes, des disques compacts et analogues, présentant, pour montage dans un véhicule à moteur, une embase de fixation qui est reliée, de façon amovible, avec son boîtier et peut se fixer dans le véhicule, caractérisé par le fait que l'embase de fixation (1, 1a) présente, sur chacune de ses deux surfaces latérales, un rebord de maintien (5) venant en prise dans des guidages (6) du boîtier (4) du conteneur qui débordent les rebords de maintien, et que sur l'embase de fixation (1, 1a) sont disposées d'autres surfaces de guidage (7), une surface de guidage étant formée par une nervure (8) en forme de pontet, qui est munie de dents (9) et s'appuie élastiquement contre un tasseau denté (10) disposé sur le boîtier (4) du conteneur.

2. Conteneur selon la revendication 1, caractérisé par le fait que les dents (9) de la nervure (8) et du tasseau denté (10) sont munies d'arrondis et/ou de flancs de dent obliques.

3. Conteneur selon la revendication 1, caractérisé par le fait que le boîtier (4) du conteneur présente deux tasseaux dentés (10) orientés parallèlement et symétriques par rapport à un plan.

4. Conteneur selon la revendication 1, caractérisé par le fait que la nervure (10) est soutenue par un ressort métallique (11).

5. Conteneur selon la revendication 1, caractérisé par le fait que l'embase de fixation (1a) est formée par une partie supérieure (13) qui peut se relier avec le boîtier (4) du conteneur et une partie inférieure (14) qui peut se fixer dans le véhicule, l'une et l'autre étant reliées par l'intermédiaire d'une articulation (15) et pouvant se bloquer l'une par rapport à l'autre dans différentes positions angulaires.

6. Conteneur selon la revendication 5, caractérisé par le fait que la face frontale de la partie supérieure et de la partie inférieure (13, 14) présente des ouvertures (16) qui sont alignées l'une avec l'autre, sont disposées l'une au-dessus de l'autre et dans lesquelles peuvent se cranter, pour bloquer la position angulaire, des coulisseaux (18), guidés dans la partie supérieure (13), avec des saillies (17) respectivement disposées sur la face frontale et adaptées aux ouvertures (16).

7. Conteneur selon la revendication 5 et 6, caractérisé par le fait que les coulisseaux (18) sont reliés l'un à l'autre par l'intermédiaire d'une traverse mobile (20), la liaison étant réalisée au moyen de tétons (21) qui sont disposés sur le coulisseau (18) et viennent en prise dans des lumières (22) de la traverse (20) disposées obliquement.

8. Conteneur selon la revendication 7, caractérisé par le fait que la traverse (20) présente un tenon (23) qui vient en prise dans les tasseaux de guidage (12) du boîtier (4) du conteneur et qui est équipé de portions partielles des surfaces de guidage (7) de l'embase de fixation (1a).
